# EUROPÄISCHE PATENTSCHRIFT

(11) **EP 0 538 599 B1**
(45) Veröffentlichungstag und Bekanntmachung des Hinweises auf die Patenterteilung: **13.12.2000**
(21) Anmeldenummer: 92115088.4
(22) Anmeldetag: 03.09.1992
(51) Int. Cl.: A01F 12/40, A01F 29/06

(54) **Häcksler**
Chopper
Hacheuse

(30) Priorität: 24.10.1991 DE 4135165
(43) Veröffentlichungstag der Anmeldung: 28.04.1993
(73) Patentinhaber: BISO B.V., NL-4707 BX Roosendaal (NL)
(72) Erfinder: Scharf, Alois, W-4520 Melle 8 (DE)
(74) Vertreter: Zinnecker, Armin, Dipl.-Ing.

(56) Entgegenhaltungen:
- EP-A- 0 164 489
- EP-A- 0 331 784
- EP-A- 0 415 419
- FR-A- 2 545 317

## Beschreibung

Die Erfindung betrifft einen Häcksler, insbesondere Anbauhäcksler für Mähdrescher, mit einer Trommel, bestehend aus einer um eine im wesentlichen horizontale Achse rotierenden Messerwelle, an deren Umfang Messer vorzugsweise schwenkbar angeordnet sind, die an ihrer Längsseite eine Schneide aufweisen, mit in den Messer-Umlaufkreis hineinragenden, vorzugsweise feststehenden Gegenmessern und mit einem in Trommel-Drehrichtung an die Gegenmesser anschließenden, entlang einem Abschnitt des Messer-Umlaufkreises Verlaufenden, in radialem Abstand von diesem angeordneten Führungsblech, an dem in Trommel-Drehrichtung im Abstand von den Gegenmessern ein Rückhalteelement vorgesehen ist und der vor dem Rückhalteelement liegende Bereich muldenförmig ausgebildet ist.

Ein derartiger Häcksler ist aus der EP-A-415 419 bekannt. Die Messer, die auch als Schlegelmesser bezeichnet werden können, sind am Umfang der rotierenden Messerwelle schwenkbar gelagert. Die feststehenden Gegenmesser befinden sich zwischen den rotierenden Messern. Als Rückhalteelement dient eine Querleiste. In Trommel-Drehrichtung vor den Gegenmessern ist eine im wesentlichen trichterförmige Einzugsöffnung vorgesehen, die insbesondere zum Einzug von Stroh dient.

Aus der EP-A-331 784 ist ein Spleisshäcksler bekannt, der eine in einem wannenförmigen Gehäuse gelagerte, im wesentlichen horizontale, angetriebene Rotorwelle besitzt, an der mehrere radial abstehende, der Zerkleinerung dienende Werkzeuge mit derart schräg zur Wellanachse geneigten Stirnkanten befestigt sind, daß diese einen fräsenden und/oder schneidenden Hüllzylinder bilden. Mit dem Gehäuse ist ein oberer Einlauftrichter verbunden. Die Zerkleinerungswerkzeuge sind als axial fördernde Einrichtungen ausgebildet, die das Gut ausgehend von dem mittleren Bereich des Hüllzylinders zu den seitlichen Auswurföffnungen transportieren. Gegenmesser sind bei dem aus der EP-A-331 784 bekannten Häcksler allerdings nicht vorhanden. In Trommel-Drehrichtung hinter dem Einlauftrichter sind mehrere Leisten angeordnet, die einen Reibboden bilden.

Aus der DE-C-823 063 ist eine Strohzerkleinerungs- und Reibevorrichtung bekannt, die aus einer umlaufenden Trommel mit Leisten oder Stiften und zugehörigem Korb besteht. Der umlaufenden Trommel ist ein Quetschwalzenpaar vorgeschaltet, das das vom Schüttler her kommende oder separat zugeführte Stroh der Zerkleinerungs- und Reibevorrichtung zuführt und während des Zerkleinerungsvorganges festhält. Die umlaufende Trommel besitzt also keine Messer, sondern lediglich Leisten oder Stifte. Eine trichterförmige Einzugsöffnung ist ebenfalls nicht vorhanden. Die Zuführung des zu zerkleinernden Gutes erfolgt vielmehr durch das erwähnte Quetschwalzenpaar. Auch Gegenmesser sind nicht vorgesehen.

Aus der FR-A-2,545,317 ist ein Häcksler mit einer Trommel bekannt, die eine um eine horizontale Achse rotierende Messerwelle aufweist, an deren Umfang Messer angeordnet sind, die eine Schneide aufweisen. Ferner sind bei dem vorbekannten Häcksler feststehende Gegenmesser vorhanden sowie ein in Trommel-Drehrichtung an die Gegenmesser anschließendes Führungsblech, das ein Rückhalteelement aufweist, welches aus mehreren Erhebungen besteht.

Aufgabe der Erfindung ist es, die Häckselwirkung der eingangs beschriebenen, aus der EP 415 419 vorbekannten Vorrichtung zu verbessern.

Diese Aufgabe wird dadurch gelöst, daß das Rückhalteelement in Form eines Reibbodens ausgebildet ist, der mehrere in Richtung zum Messer-Umlaufkreis weisende Erhebungen aufweist und der von diesem muldenförmigen Bereich durch eine in Richtung zum Messer-Umlaufkreis weisende stufenförmige Erhöhung, die Teil des Rückhalteelementes ist, abgesetzt ist und daß diese stufenförmige Erhöhung höher ist als die Erhebungen am Reibboden.

Durch die Erfindung wird der Vorteil erreicht, daß das bereits geschnittene Stroh, das die Gegenmesser passiert hat, an der stufenförmigen Erhöhung zurückgehalten wird. Halme, die die Gegenmesser in Umlaufrichtung passiert haben und noch ungeschnitten sind, werden durch diese Stufe quergerichtet. Dieser Effekt ist besonders ausgeprägt, wenn die Stufe verhältnismäßig groß ist. An dieser Stufe erfolgt ein weiteres Schneiden insbesondere der durch sie quergerichteten Halme. Anschließend gelangt das Halmgut auf den Reibboden der beispielsweise in an sich bekannter Weise mehrere hintereinander angeordnete Querleisten aufweist. Hier werden die Halme weiter zerkleinert und in Längsrichtung aufgespalten. Insgesamt werden in Umlaufrichtung der Trommel geförderte Halme noch besser und zuverlässiger quergelegt.

Vorteilhafte Weitarbildungen sind in den Unteransprüchen beschrieben.

Vorzugsweise ist im muldenförmigen Bereich ein Schwenkblech vorgesehen, das zur stufenförmigen Erhöhung ansteigend verschwenkbar ist. In Trommel-Drehrichtung kann also der radiale Abstand zur Trommel-Drehachse verringert werden, wodurch die Vorrichtung an verschiedene Betriebsverhältnisse und Anforderungen angepaßt werden kann.

An der stufenförmigen Erhöhung kann vor dieser eine Schneide vorgesehen sein. Vorzugsweise ragt diese Schneide in den Messer-Umlaufkreis hinein. Sie ist dann im Bereich der Messer unterbrochen.

Das Führungsblech kann in Trommel-Drehrichtung hinter dem Reibboden einen sich erweiternden Bereich aufweisen, der sich stufenförmig an den Reibboden anschließt. Dieser Bereich kann nach Art eines sich erweiternden Trichters ausgestaltet sein. Das zerkleinerte, aber abgebremste Halmgut wird so in dem sich erweiternden Bereich erneut beschleunigt. Es kann von dort in eine geeignete Verteilvorrichtung gelenkt werden.

Das in Form eines Reibbodens ausgebildete Rückhalteelement ist vorzugsweise als eine Einheit ausgebildet, die mit dem Führungsblech lösbar verbunden ist.

Vorzugsweise ist die Höhe des Reibbodens verstellbar.

Die Erhebungen des Reibbodens können im Bereich zwischen den Messern in den Messer-Umlaufkreis hineinragen. Im Bereich der Messer sind also Durchbrüche in den Erhebungen vorhanden.

Der Reibboden weist vorzugsweise mehrere hintereinander angeordnete Querleisten auf.

Die Erhebungen des Reibbodens können aber auch wellenförmig sein. Vorzugsweise sind der Reibboden und dessen Erhebungen einstückig, beispielsweise aus einem Blech, gefertigt.

Die Erhebungen des Reibbodens können auch aus einzelnen Zapfen bestehen. Diese Zapfen können rund, rechteckig, quadratisch oder von sonstiger Form sein.

Ferner können die Erhebungen des Reibbodens aus unterbrochenen Querleisten bestehen. Diese Querleisten können versetzt angeordnet sein. Die Erhebungen des Reibbodens können auch aus zickzackartig angeordneten Leisten oder aus abwechselnd diagonal angeordneten Leisten bestehen.

Eine weitere vorteilhafte Weiterbildung besteht darin, daß die den Reibboden umfassende Einheit drehbar ist. Vorzugsweise ist die Einheit dann um 180° drehbar und in jeder ihrer beiden Stellungen arretierbar. Auch hierdurch wird eine Anpassungsmöglichkeit an unterschiedliche Erntegüter geschaffen. Dabei ist vorzugsweise auf einer Seite der drehbaren Einheit ein glatter Boden vorgesehen.

Nach einer weiteren vorteilhaften Weiterbildung sind die Messer an ihrer Stirnseite schneidenförmig gestaltet. Dies ist aus der EP-A-415 419 an sich bekannt. Dadurch, daß die Messer nicht nur an ihrer Längsseite, sondern auch an ihrer Stirnseite eine Schneide aufweisen, wird die Häckselwirkung weiter verbessert. Die Schneide an der Stirnseite kann glatt oder gewellt oder von sonstiger aus der genannten EP-A-415 419 an sich bekannter Form sein.

Ausführungsbeispiele der Erfindung werden nachstehend anhand der beigefügten Zeichnungen im einzelnen erläutert. In den Zeichnungen zeigt
- Fig. 1: den hinteren Bereich eines Mähdreschers mit angebautem Häcksler,
- Fig. 2: eine erste Ausführungsform eines Häckslers in einer Seitenansicht mit dem stufenförmig erhöhten Reibboden,
- Fig. 3: eine weitere Ausführungsform eines Häckslers mit einer stufenförmig abgesetzten Erweiterung nach dem Reibboden,
- Fig. 4: eine weitere Ausführungsform mit einem schwenkbaren Blech im Bereich vor dem Reibboden,
- Fig. 5: eine weitere Ausführungsform, bei der das Rückhalteelement in Form eines Reibbodens als mit dem Führungsblech lösbar verbundene Einheit ausgebildet ist,
- Fig. 6: eine weitere Ausführungsform, bei der das als Einheit ausgebildete Rückhalteelement in der Zustellung variabel ist,
- Fig. 7: eine weitere Ausführungsform, bei der der Reibboden einstückig und gewellt ausgeführt ist,
- Fig. 8: eine weitere Ausführungsform, bei der an der stufenförmigen Erhöhung eine Schneide vorgesehen ist,
- Fig. 9: eine weitere Ausführungsform, bei der der Reibboden einzelne Zapfen aufweist,
- Fig. 10: eine weitere Ausführungsform, bei der das Rückhalteelement in Form eines Reibbodens eine drehbare Einheit bildet,
- Fig. 11: die in Fig. 10 dargestellte Einheit in einer um 180° verschwenkten Stellung,
- Fig. 12: eine weitere Ausführungsform, bei der der Reibboden unterbrochenen Querleisten aufweist,
- Fig. 13: eine weitere Ausführungsform, bei der der Reibboden in Flußrichtung des Häckselgutes zickzackartig angeordnete Leisten aufweist,
- Fig. 14: eine weitere Ausführungsform, bei der der Reibboden abwechselnd diagonal angeordnete Leisten aufweist,
- Fig. 15: eine weitere Ausführungsform, bei der die in Trommel-Drehrichtung erste Querleiste des Reibbodens weggelassen wurde.

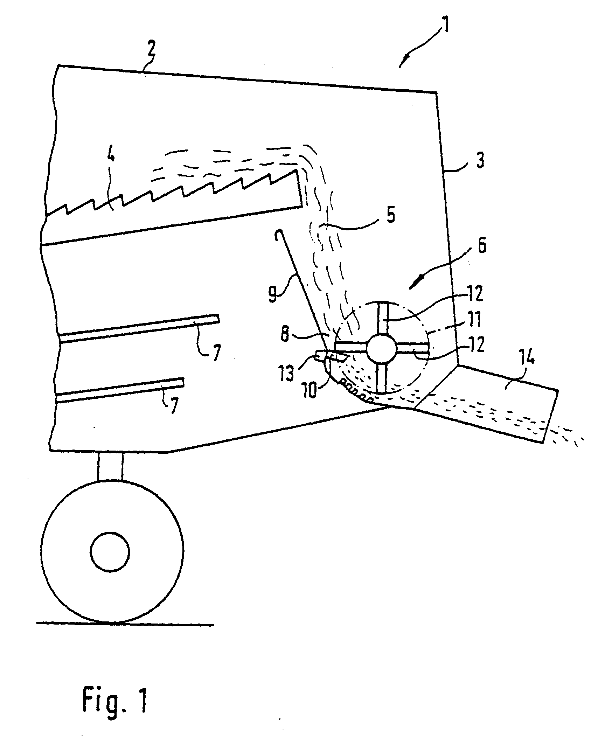

Der in der Fig. 1 von der Seite dargestellte hintere Bereich des Mähdreschers 1 besteht aus einem Gehäuse 2 mit einem hinteren Abschlußblech 3. In dem Gehäuse 2 ist der Schüttler 4 angeordnet, von dem das Stroh 5 dem Häcksler 6 zugeführt wird. Unter dem Schüttler 4 sind die Siebe 7 angeordnet. Das Stroh 5 wird dem Häcksler 6 durch eine Einzugsöffnung 8 zugeführt, die am Ende eines Einzugsblechs 9 liegt. Das Einzugsblech 9 ist derart geneigt angeordnet, daß ein zur Einzugsöffnung 8 führender Einzugstrichter gebildet wird. Unmittelbar hinter der Einzugsöffnung 8 sind die feststehenden Gegenmesser 10 angeordnet, die in den Umlaufkreis 11 der Schlegelmesser 12 hineinragen und die sich zwischen den Schlegelmessern 12 befinden. Die Gegenmesser 10 sind mit dem Einzugsblech 9 über eine Montageschiene 13 fest verbunden. Nach Durchlaufen des Häckslers 6 wird das Stroh 5 durch eine Verteilvorrichtung 14 von an sich bekannter Bauart verteilt.

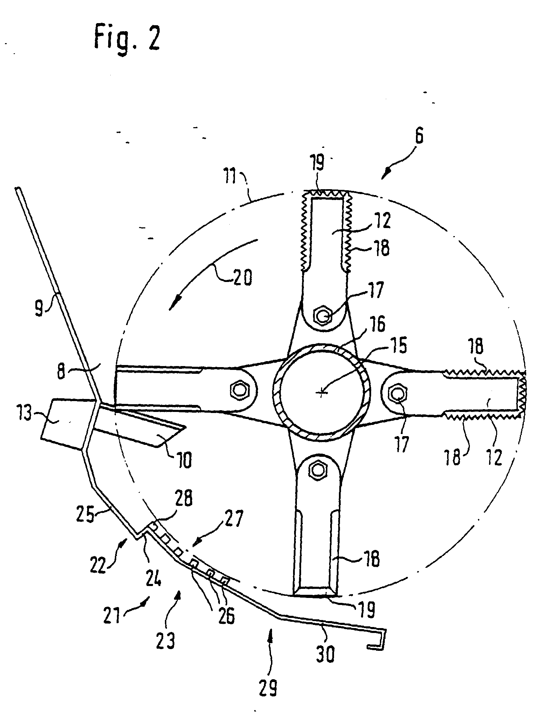

Die Fig. 2 zeigt den Häcksler 6 in einer vergrößerten Darstellung. Er besitzt eine Trommel, die aus einer um eine im wesentlichen horizontale Achse 15 rotierenden Messerwelle 16 besteht, an deren Umfang jeweils vier Messer 12 um Achsen 17 schwenkbar angeordnet sind. Die Messer 12, die wegen ihrer schwenkbaren Lagerung auch als Schlegelmesser bezeichnet werden können, weisen an ihren Längsseiten Schneiden 18 auf. Wie in Fig. 2 gezeigt, können diese Schneiden 18 an den Längsseiten sowohl glatt als auch gezahnt sein. Zur weiteren Verbesserung der Häckselwirkung besitzen die Messer darüber hinaus auch noch Schneiden 19 an ihren Stirnseiten, die ebenfalls glatt oder gezahnt sein können.

An die Gegenmesser 10 schließt sich in Trommel-Drehrichtung 20 ein Führungsblech 21 an, das entlang einem Abschnitt des Messer-Umlaufkreises 11 und im Abstand vom Messer-Umlaufkreis 11 verläuft. Das Führungsblech 21 besitzt ein nach innen weisendes Rückhalteelement, des - in Drehrichtung 20 des Messer-Umlaufkreises 11 gesehen - im Abstand hinter den Gegenmessern 10 liegt und das nachfolgend im einzelnen beschrieben wird.

Das Rückhalteelement 23 des Führungsblechs 21 besteht aus einem stufenförmig zum Messer-Umlaufkreis 11 hin erhöhten Reibboden 27, der mehrere Erhebungen 26 aufweist. Dabei ist die stufenförmige Erhöhung 22 größer als die - in Trommel-Drehrichtung 20 - dahinter liegenden Erhebungen 26 des Reibbodens 27. Hierdurch wird die Häckselwirkung verbessert. Diejenige Halme, die in Umlaufrichtung, also parallel zum Messer-Umlaufkreis 11, gefördert werden, werden noch besser quergelegt. An der Stufe 22 erfolgt ein weiteres Schneiden, bevor das Halmgut auf den daran anschliessenden Reibboden gelangt, wo es weiter kleingehäckselt wird.

Die stufenförmige Erhöhung 22 ist als zur Trommel-Drehachse 15 hin weisende Abkantung 24 ausgestaltet. In Messer-Drehrichtung 20 davor ist das Führungsblech 21 als Mulde 25 ausgestaltet. Die in Messer-Drehrichtung 20 am weitesten vorne liegende Erhebung 28 des Reibbodens 27 schließt sich bündig an die Abkantung 24 der stufenförmigen Erhöhung 22 an. Hierdurch wird diese stufenförmige Erhöhung 22 weiter erhöht. Die radial innen liegenden Enden der Erhebungen 26 liegen außerhalb des Messer-Umlaufkreises 11. Die Erhebungen 26 sind als mehrere hintereinander angeordnete Querleisten ausgestaltet. Sie bilden aufeinanderfolgende Stufen, deren Stufentiefe kleiner gehalten ist als bei der stufenförmigen Erhöhung 22. Diese Maßnahme ermöglicht eine weitere Zerkleinerung der Halme in Längsrichtung im Bereich des Reibbodens 27.

In Messer-Umlaufrichtung 20 hinter dem Reibboden 27 schließt sich ein dritter Bereich 29 an, der als sich in radialer Richtung erweiterndes Blech 30 ausgebildet ist. Das durch den Reibboden 27 zerkleinerte, aber auch abgebremste Halmgut wird auf diese Weise erneut beschleunigt. Es wird in die (in der Fig. 2 aus Gründen der vereinfachten zeichnerischen Darstellung weggelassene) Verteilvorrichtung 14 gelenkt.

Das Führungsblech 21 ist einstückig ausgebildet. Es besteht aus der Mulde 25 der die stufenförmige Erhöhung 22 bildenden Abkantung 24, dem Reibboden 27 und dem dritten Bereich 29. Im Bereich des Reibbodens 27 sind mit dem Führungsblech 21 die Querleisten 26 verbunden.

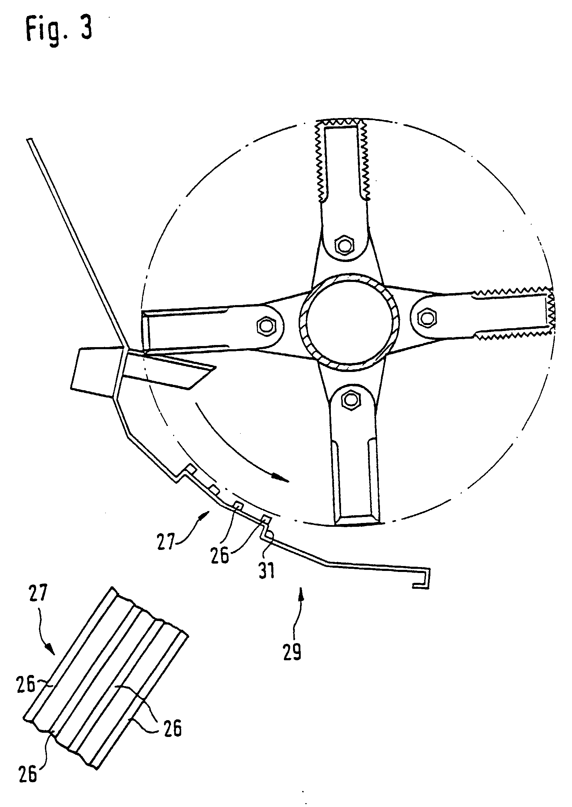

In der Ausführungsform der Fig. 3 sind weniger Leisten 26 vorhanden, die in Messer-Umlaufrichtung 20 eine größere Breite und einen größeren Abstand voneinander aufweisen. Im dritten Bereich 29 ist eine nach außen weisende Abkantung 31 vorhanden, die eine weitere Stufe bildet. Dies hat sich für die oben anhand der Fig. 2 beschriebenen Beschleunigungs- und Strömungsvorgänge als zweckmäßig und vorteilhaft erwiesen. Im linken unteren Bereich der Fig. 3 sind die Leisten 26 des Reibbodens 27 in Draufsicht dargestellt.

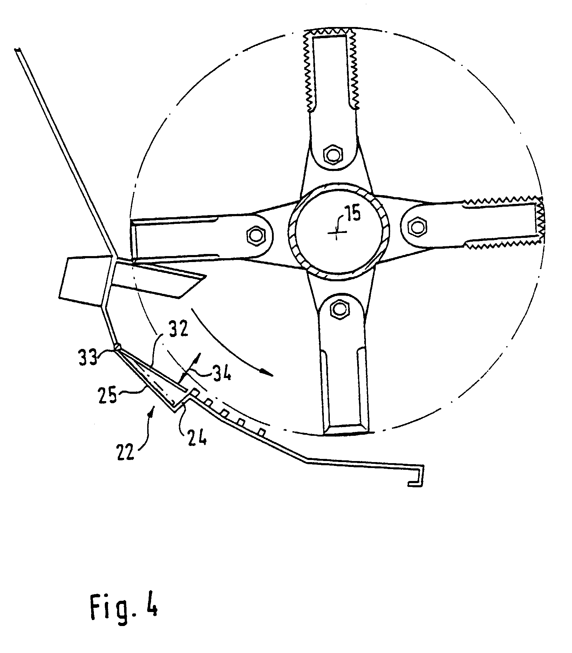

Bei der in Fig. 4 gezeigten Variante ist das Führungsblech im muldenförmigen Bereich 25 vor der stufenförmigen Erhöhung 22 schwenkbar gestaltet. Ein Schwenkblech 32 ist um eine auf dem Führungsblech vorgesehene, zur Trommel-Drehachse 15 parallele Achse 33 schwenkbar gelagert. Die Schwenkmöglichkeit ist durch den Doppelpfeil 34 angedeutet. Das Schwenkblech 32 ist in verschiedenen Schwenklagen arretierbar. Hierdurch ist die Höhe der durch die Abkantung 24 gebildeten stufenförmigen Erhöhung 22 verstellbar. Im Bereich des Schwenkblechs 32 verläuft das Führungsblech demnach ansteigend, und zwar je nach Schwenkstellung verschieden stark.

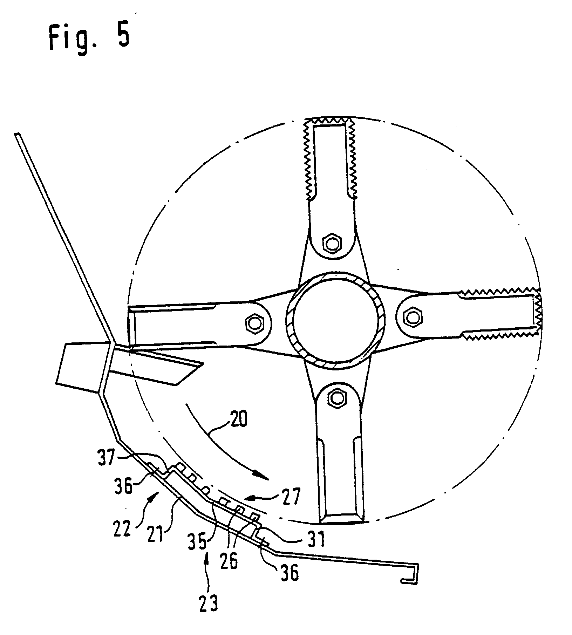

Nach der Fig. 5 besteht das Rückhalteelement, das in Form des Reibbodens ausgebildet ist aus einer Einheit 35. Dabei ist wiederum die stufenförmige Erhöhung 22 höher als die Erhebungen des Reibbodens 27, die aus mehreren beabstandeten Querleisten 26 bestehen. Die Einheit 35 wird von einem U-förmigen Blech gebildet, das mit dem Führungsblech 21 durch (in der Zeichnung lediglich angedeutete) Schrauben oder ähnliche Befestigungselemente 36 lösbar verbindbar ist. Die stufenförmige Erhöhung wird von dem in Trommel-Drehrichtung 20 vorne liegenden Schenkel 37 der U-förmigen Einheit 35 gebildet. Der hinten liegende Schenkel 31 der U- förmigen Einheit 35 bildet die oben (vgl. Fig. 3) bereits erläuterte weitere Stufe 31.

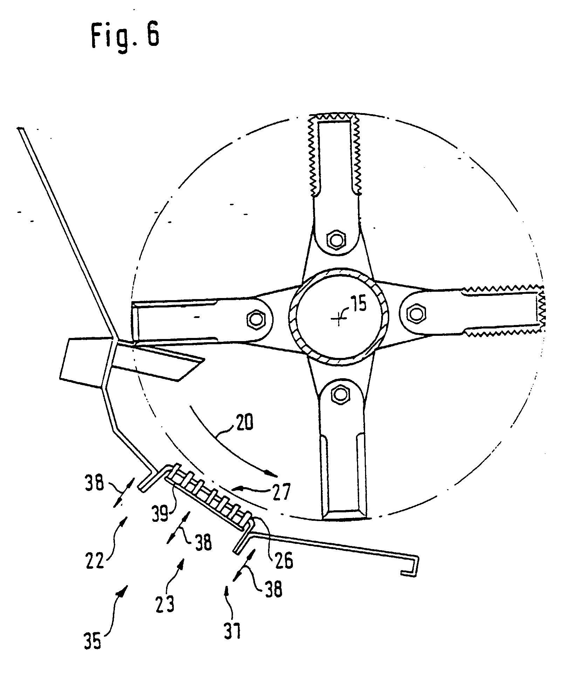

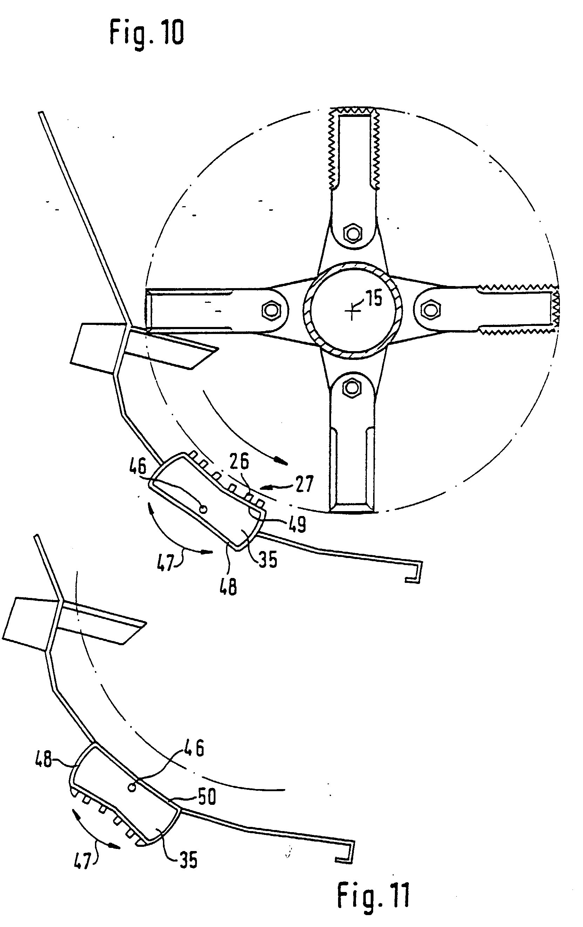

Bei der in Fig. 6 gezeigten Ausführungsform wird die stufenförmige Erhöhung 22, der Reibboden 27 und die weitere Stufe 31 wiederum von einer Einheit 35 gebildet, die diesmal allerdings in der Zustellung in Richtung 38 zur Trommel-Drehachse 15 hin variabel ist, so daß die Höhe der Einheit 35 und damit auch die Höhe der stufenförmigen Erhöhung verstellbar ist. Hierdurch kann das bei der Ausführungsform der Fig. 5 erforderliche Umrüsten der Einheit 35 vereinfacht bzw. vermieden werden. Eine individuelle Einstellung je nach den Anforderungen der jeweiligen Anwendung wird dadurch ermöglicht. Bei der Ausführungsform der Fig. 5 kann die Einheit 35 - wie für unterschiedliche Erntegüter erforderlich - eingebaut oder ausgebaut werden. Bei der Ausführungsform der Fig. 6 werden in einer demgegenüber verbesserten Weise die Stufenhöhen individuell eingestellt. Die Stufenhöhen können im Extremfall soweit verstellt werden, daß die Einheit wieder einen glatten Boden bildet, wie dies in der Fig. 11 dargestellt ist.

Die Leisten 26 des Reibbodens 27 sind an ihren radial äußeren Enden mit einer Führungsleiste 39 verbunden. Die Leisten 26 sind ferner in Durchbrüchen der Einheit 35 geführt. Hierdurch kann die Höhe der Leisten 26 gegenüber der Einheit 35 verstellt werden, was eine weitere Anpassungsmöglichkeit an verschiedene Erntegüter schafft.

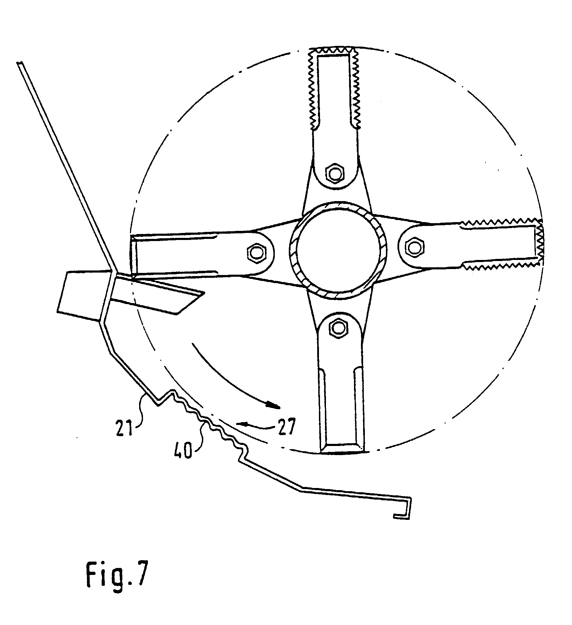

In der Ausführungsform der Fig. 7 wird der Reibboden 27 durch ein wellenförmiges Blech 40 gebildet, das mit dem Führungsblech 21 einstückig ist. Das gewellte Blech 40 kann runde oder dreieckförmige oder sonstige Wellen aufweisen. Dadurch können die Scnnittverhältnisse und der Leistungsbedarf beeinflußt werden.

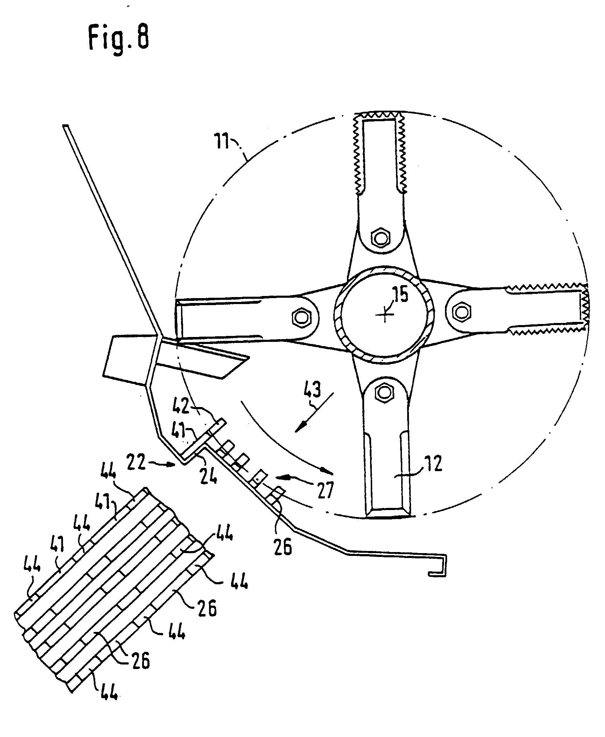

In der in Fig. 8 gezeigten Ausführungsform weist die die stufenförmige Erhöhung 22 bildende Abkantung 24 eine Schneide 41 auf, deren oberer Bereich 42 in den Messer-Umlaufkreis 11 hineinragt. Die Schneide 41 weist in radialer Richtung zur Trommel- Drehachse 15 hin. Im linken unteren Bereich der Fig. 8 sind die Schneide 41 und die Leisten 26 des Reibbodens 27 von oben (in Richtung des Pfeils 43) dargestellt. Auch die Leisten 26 ragen in den Messer-Umlaufkreis 11 hinein. Um eine Kollision mit den umlaufenden Schlegelmessern 12 zu vermeiden, sind im Bereich der Umlaufkreise dieser Messer 12 Durchbrüche 44 vorhanden, und zwar sowohl in den Leisten 26 als auch in der Schneide 41. Durch diese Durchbrüche 44 sind die Schneide 41 und die Leisten 26 unterbrochen.

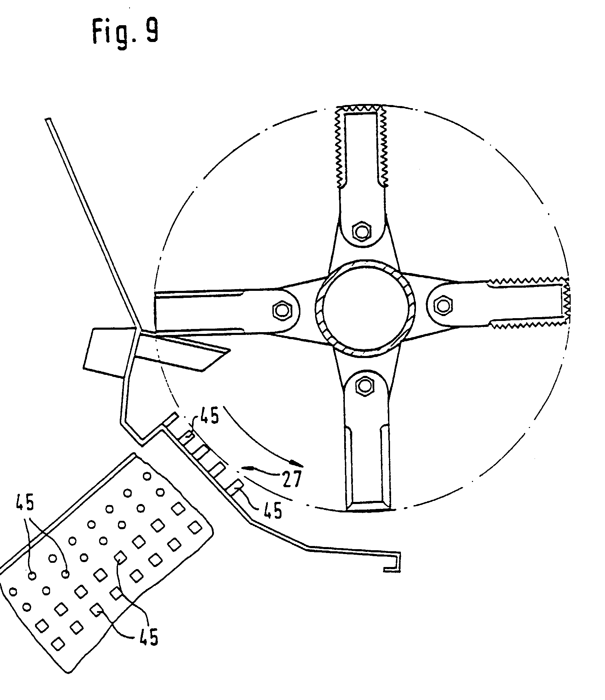

Bei der Ausführungsform der Fig. 9 bestehen die Erhöhungen des Reibbodens 27 aus einzelnen Zapfen 45, die im Querschnitt rund oder rachteckig oder quadratisch oder von sonstiger Form sein können.

In den Fig. 10 und 11 ist eine Ausführungsform gezeigt, bei der - ähnlich wie in den Fig. 5 und 6 - das Rückhalteelement aus einer Einheit 35 besteht, die diesmal allerdings um eine parallel zur Trommel-Drehachse 15 verlaufende Achse 46 drehbar gelagert ist, wie durch den Doppelpfeil 47 angedeutet. Die Einheit 35 wird durch ein Kastenprofil 48 gebildet. An einer Seite 49 sind die den Reibboden 27 bildenden Querleisten 26 befestigt. Auf der gegenüberliegenden Seite des Kastenprofils ist ein glatter Boden 50 vorgesehen. Die Einheit 35 kann in den beiden in den Fig. 10 und 11 gezeigten, um 180° verschwenkten Stellungen arretiert werden. Durch eine Drehung der Einheit 35 um 180° um die Achse 46 wird eine schnelle Umstellungsmöglichkeit für unterschiedliche Ernteverhältnisse geschaffen.

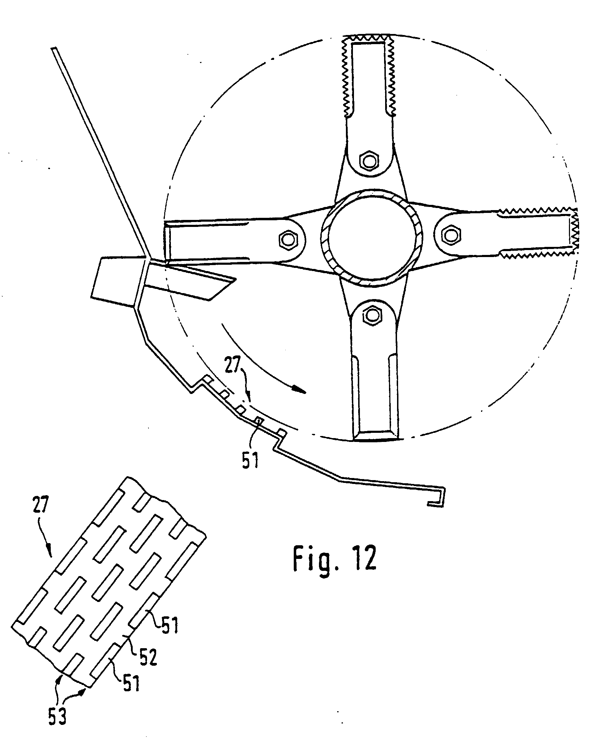

Bei der in Fig. 12 gezeigten Ausführungsform bestehen die Erhöhungen das Reibbodens 27 aus unterbrochenen Querleisten 51. Zwischen den Erhöhungen 51 befinden sich Lücken 52, die von einer Reihe 53 zur nächsten Reihe 53 versetzt zueinander angeordnet sind.

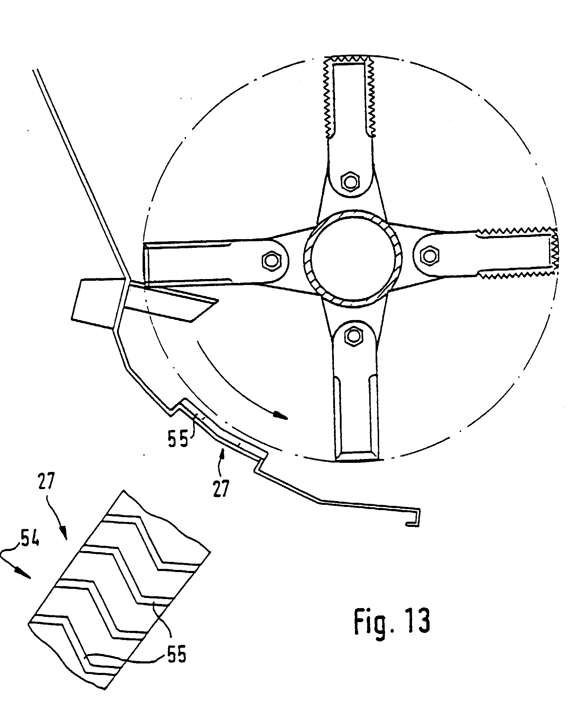

In der Fig. 13 ist eine Ausführungsform dargestellt, bei der der Reibboden 27 in Flußrichtung 54 des Häckselgutes zickzackartig angeordnete Leisten 55 aufweist.

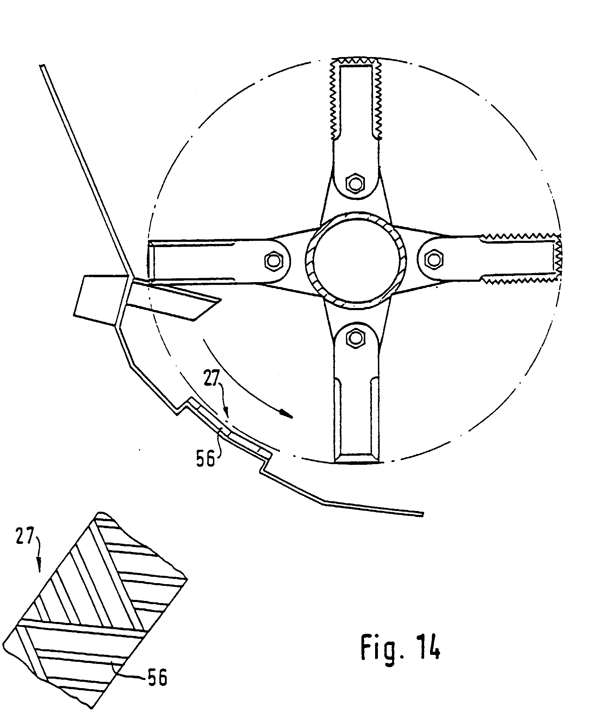

Nach der Variante der Fig. 14 sind am Reibboden 27 abwechselnd diagonal angeordnete Leisten 56 vorgesehen.

Durch die in den Fig. 9, 12, 13 und 14 dargestellte Anordnung wird besonders zuverlässig vermieden, daß sich der Reibboden 27 durch das Häckselgut zusetzt, sondern durch Überstreichen des Häckselgutes freigehalten wird und somit in seiner Wirkung erhalten bleibt.

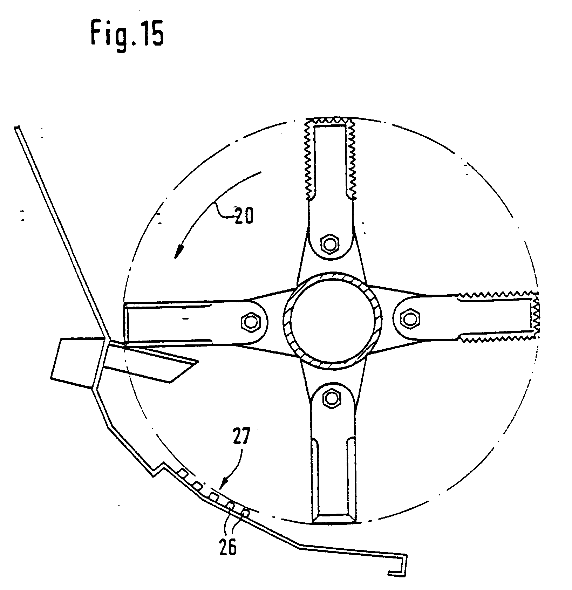

Die Fig. 15 zeigt eine Ausführungsform, die im wesentlichen derjenigen der Fig. 2 entspricht, bei der allerdings die in Trommel-Drehrichtung 20 am vordersten Ende liegende Leiste 26 (in der Fig. 2 als Leiste 28 bezeichnet) des Reibbodens 27 weggelassen wurde. Die Leisten des Reibbodens beginnen damit nicht - wie in der Fig. 2 - an der stufenförmigen Erhöhung, sondern in Trommel-Drehrichtung etwas dahinter.

## Patentansprüche

1. Häcksler, insbesondere Anbauhäcksler für Mähdrescher,
- mit einer Trommel, bestehend aus einer um eine im wesentlichen horizontale Achse (15) rotierenden Messerwelle (16), an deren Umfang Messer (12) vorzugsweise schwenkbar (17) angeordnet sind, die an ihrer Längsseite eine Schneide (18) aufweisen,
- mit in den Messer-Umlaufkreis (11) hineinragenden, vorzugsweise feststehenden Gegenmessern (10)
- und mit einem in Trommel-Drehrichtung (20) an die Gegenmesser (10) anschließenden, entlang einem Abschnitt des Messer-Umlaufkreises (11) verlaufenden, in radialem Abstand von diesem angeordneten Führungsblech (21),
- an dem in Trommel-Drehrichtung im Abstand von den Gegenmessern (10) ein Rückhalteelement vorgesehen ist
- und der vor dem Rückhalteelement liegende Bereich muldenförmig ausgebildet ist
dadurch gekennzeichnet,
- daß das Rückhalteelement in Form eines Reibbodens (27) ausgebildet ist, der mehrere in Richtung zum Messer-Umlaufkreis (11) weisende Erhebungen (26) aufweist und der von diesem muldenförmigen Bereich durch eine in Richtung zum Messer-Umlaufkreis weisende stufenförmige Erhöhung, die Teil des Rückhalteelementes ist, abgesetzt ist,
- und daß diese stufenförmige Erhöhung höher ist als die Erhebungen (26) am Reibboden.

2. Häcksler nach Anspruch 1, dadurch gekennzeichnet, daß im muldenförmigen Bereich ein Schwenkblech (32) vorgesehen ist, das zur stufenförmigen Erhöhung ansteigend verschwenkbar ist (Figur 4).

3. Häcksler nach einem der vorherigen Ansprüche, dadurch gekennzeichnet, daß an der stufenförmigen Erhöhung vor dieser eine Schneide (41) vorgesehen ist (Figur 8).

4. Häcksler nach Anspruch 3, dadurch gekennzeichnet, daß die Schneide (41) in den Messer-Umlaufkreis (11) hineinragt und im Bereich der Messer (12) unterbrochen ist.

5. Häcksler nach einem der vorherigen Ansprüche, dadurch gekennzeichnet, daß in Trommel-Drehrichtung hinter dem Reibboden (27) ein sich erweiternder Bereich stufenförmig an den Reibboden anschließt.

6. Häcksler nach einem der vorherigen Ansprüche, dadurch gekennzeichnet, daß das in Form eines Reibbodens (27) ausgebildete Rückhalteelement eine Einheit (35) bildet, die mit dem Führungsblech (21) lösbar verbunden ist (Fig. 5).

7. Häcksler nach Anspruch 6, dadurch gekennzeichnet, daß der radiale Abstand des Reibbodens zum Messer-Umfangskreis verstellbar ist (Figur 6).

8. Häcksler nach einem der vorherigen Ansprüche, dadurch gekennzeichnet, daß die am Reibboden (27) angeordneten Erhebungen (26) im Bereich zwischen den Messern (12) in den Messer-Umlaufkreis (11) hineinragen (Figur 8).

9. Häcksler nach einem der vorherigen Ansprüche, dadurch gekennzeichnet, daß der Reibboden (27) mehrere hintereinander angeordnete Querleisten (26) aufweist.

10. Häcksler nach einem der Ansprüche 1 bis 8, dadurch gekennzeichnet, daß die Erhebungen (26) des Reibbodens (27) wellenförmig (40) sind (Figur 7).

11. Häcksler nach Anspruch 10, dadurch gekennzeichnet, daß der Reibboden und dessen Erhebungen (26, 40) aus einem Blech gefertigt sind.

12. Häcksler nach einem der Ansprüche 1 bis 8, dadurch gekennzeichnet, daß die Erhebungen des Reibbodens (27) aus einzelnen Zapfen (45) bestehen (Figur 9).

13. Häcksler nach einem der Ansprüche 1 bis 8, dadurch gekennzeichnet, daß die Erhebungen des Reibbodens (27) aus unterbrochenen (52) Querleisten (51) bestehen (Figur 12).

14. Häcksler nach einem der Ansprüche 1 bis 8, dadurch gekennzeichnet, daß die Erhebungen des Reibbodens (27) aus zickzackartig angeordneten Leisten (55) bestehen (Figur 13).

15. Häcksler nach einem der Ansprüche 1 bis 8, dadurch gekennzeichnet, daß die Erhebungen des Reibbodens (27) aus abwechselnd diagonal angeordneten Leisten (56) bestehen (Figur 14).

16. Häcksler nach Anspruch 6, dadurch gekennzeichnet, daß die Einheit (35) drehbar (47) ist (Figuren 10 und 11).

## Claims

1. Chopper, in particular a mounted chopper for combine harvesters, having a drum consisting of a blade shaft (16) which rotates about an essentially horizontal axis (15) and on the circumference of which blades (12) are arranged preferably in such a way as to be pivotable (17), which blades (12) have a cutting edge (18) on their longitudinal side, having preferably fixed counterblades (10) projecting into the blade revolving circle (11), and having a guide plate (21) which adjoins the counterblades (10) in the drum rotation direction (20), runs along a section of the blade revolving circle (11) and is arranged at a radial distance from the latter, and on which a retaining element is provided in the drum rotation direction at a distance from the counterblades (10), and the region lying upstream of the retaining element is of trough-shaped design, characterized in that the retaining element is designed in the form of a grating base (27) which has a plurality of prominences (26) pointing in the direction of the blade revolving circle (11) and is offset from this trough-shaped region by a stepped elevation which points in the direction of the blade revolving circle and is part of the retaining element, and in that this stepped elevation is higher than the prominences (26) on the grating base.

2. Chopper according to Claim 1, characterized in that a pivoted plate (32) is provided in the trough-shaped region and is pivotable in such a way as to rise towards the stepped elevation (Figure 4).

3. Chopper according to one of the preceding claims, characterized in that a cutting edge (41) is provided on the front of the stepped elevation (Figure 8).

4. Chopper according to Claim 3, characterized in that the cutting edge (41) projects into the blade revolving circle (11) and is discontinuous in the region of the blades (12).

5. Chopper according to one of the preceding claims, characterized in that, in the drum rotation direction downstream of the grating base (27), a widening region adjoins the grating base in a stepped manner.

6. Chopper according to one of the preceding claims, characterized in that the retaining element designed in the form of a grating base (27) forms a unit (35) which is detachably connected to the guide plate (21) (Fig. 5).

7. Chopper according to Claim 6, characterized in that the radial distance between the grating base and the blade revolving circle is adjustable (Figure 6).

8. Chopper according to one of the preceding claims, characterized in that the prominences (26) arranged on the grating base (27) project in the region between the blades (12) into the blade revolving circle (11) (Figure 8).

9. Chopper according to one of the preceding claims, characterized in that the grating base (27) has a plurality of transverse strips (26) arranged one behind the other.

10. Chopper according to one of Claims 1 to 8, characterized in that the prominences (26) of the grating base (27) are corrugated (40) (Figure 7).

11. Chopper according to Claim 10, characterized in that the grating base and its prominences (26, 40) are produced from a sheet-metal plate.

12. Chopper according to one of Claims 1 to 8, characterized in that the prominences of the grating base (27) consist of individual pegs (45) (Figure 9).

13. Chopper according to one of Claims 1 to 8, characterized in that the prominences of the grating base (27) consist of discontinuous (52) transverse strips (51) (Figure 12).

14. Chopper according to one of Claims 1 to 8, characterized in that the prominences of the grating base (27) consist of strips (55) arranged in a zigzag manner (Figure 13).

15. Chopper according to one of Claims 1 to 8, characterized in that the prominences of the grating base (27) consist of strips (56) arranged alternately in a diagonal manner (Figure 14).

16. Chopper according to Claim 6, characterized in that the unit (35) is rotatable (47) (Figures 10 and 11).

## Revendications

1. Hacheuse, notamment hacheuse portée pour des moissonneuses-batteuses, avec un tambour, constitué d'un arbre à couteaux (16), tournant autour d'un axe (15) sensiblement horizontal, au pourtour duquel sont disposés des couteaux (12) de préférence d'une manière pivotante (17), qui possèdent à leur côté longitudinal un tranchant (18), avec des contre-couteaux (10) faisant saillie dans le cercle de rotation (11) des couteaux, de préférence fixes et avec une tôle de guidage (21), faisant suite dans la direction de rotation (20) du tambour aux contre-couteaux (10), s'étendant le long d'un tronçon du cercle de rotation (11) des couteaux, disposée à une distance radiale de celui-ci, à laquelle est prévu, dans la direction de rotation du tambour, à une distance des contre-couteaux (10), un élément de retenue et où la zone située devant l'élément de retenue est réalisée en forme de creux, caractérisée en ce que l'élément de retenue est réalisé sous forme de fond râpant (27) qui présente plusieurs surélévations (26) orientées dans la direction vers le cercle de rotation (11) des couteaux et qui est décalé de cette zone en forme de creux par une surélévation en forme de gradin orientée dans la direction vers le cercle de rotation des couteaux, qui fait partie de l'élément de retenue, et en ce que cette surélévation en forme de gradin est plus haute que les surélévations (26) au fond râpant.

2. Hacheuse selon la revendication 1, caractérisée en ce qu'il est prévu dans la zone en forme de creux une tôle pivotante (32) apte à pivoter en remontant vers la surélévation en forme de gradin (figure 4).

3. Hacheuse selon l'une des revendications précédentes, caractérisée en ce qu'il est prévu à la surélévation en forme de gradin, devant celle-ci, un tranchant (41) (figure 8).

4. Hacheuse selon la revendication 3, caractérisée en ce que le tranchant (41) fait saillie dans le cercle de rotation (11) des couteaux et est interrompu au voisinage des couteaux (12).

5. Hacheuse selon l'une des revendications précédentes, caractérisée en ce que dans la direction de rotation du tambour, derrière le fond râpant (27), une zone d'élargissement fait suite en forme de gradin au fond râpant.

6. Hacheuse selon l'une des revendications précédentes, caractérisée en ce que l'élément de retenue réalisé sous forme de fond râpant (27) forme une unité (35) qui est reliée amoviblement à la tôle de (21) (figure 5).

7. Hacheuse selon la revendication 6, caractérisée en ce que l'écart radial du fond râpant au cercle de rotation des couteaux est ajustable (figure 6).

8. Hacheuse selon l'une des revendications précédentes, caractérisée en ce que les surélévations (26) disposées au fond râpant (27) font saillie dans la zone entre les couteaux (12) dans le cercle de rotation (11) des couteaux (figure 8).

9. Hacheuse selon l'une des revendications précédentes, caractérisée en ce que le fond râpant (27) présente plusieurs nervures transversales (26) disposées les unes derrière les autres.

10. Hacheuse selon l'une des revendications 1 à 8, caractérisée en ce que les surélévations (26) du fond râpant (27) sont ondulées (40) (figure 7).

11. Hacheuse selon la revendication 10, caractérisée en ce que le fond râpant et les surélévations (26, 40) de celui-ci sont réalisés en une tôle.

12. Hacheuse selon l'une des revendications 1 à 8, caractérisée en ce que les surélévations du fond râpant (27) sont constituées de tenons individuels (45) (figure 9).

13. Hacheuse selon l'une des revendications 1 à 8, caractérisée en ce que les surélévations du fond râpant (27) sont constituées de nervures transversales (51) interrompues (52) (figure 12).

14. Hacheuse selon l'une des revendications 1 à 8 , caractérisée en ce que les surélévations du fond râpant (27) sont constituées de nervures (55) disposées en zigzag. (figure 13).

15. Hacheuse selon l'une des revendications 1 à 8, caractérisée en ce que les surélévations du fond râpant (27) sont constituées de nervures (56) disposées alternativement diagonalement (figure 14).

16. Hacheuse selon la revendication 6, caractérisée en ce que l'unité (35) est apte à tourner (47) (figures 10 et 11).
